# EUROPEAN PATENT APPLICATION

(11) **EP 0 529 788 A1**
(43) Date of publication of application: **03.03.1993**
(21) Application number: 92306437.2
(22) Date of filing: 14.07.1992
(51) Int. Cl.: H04N 1/00

(54) **Data transmitting and/or receiving device**

(30) Priority: 01.08.1991 AU 7559/91
(71) Applicant: DU PONT (AUSTRALIA) LTD.., North Sydney, NSW 2060 (AU); CREATIVE PRODUCT DESIGN PTY LIMITED, West Melbourne, Victoria 3000 (AU)
(72) Inventor: Schmocker, Thomas Walter, North Sydney NSW 2060 (AU); Cocks, Ian Robert, Australia (AU)
(74) Representative: Barnard, Eric Edward

(57) **Abstract**

A transceiver (10) is disclosed which permits (preferably) facsimile transmissions over a communications network (4) using a data storage medium (1) such as a disk (3) or a memory card (2) with which transmission data is stored prior to transmission and after the reception. In a portable embodiment, the transceiver includes a self-contained power supply (16) and limited user interface (13). Transmission data can be either up-loaded to, or down-loaded from the data storage medium (1) using a known computer system.

## Description

### Field of the Invention

The present invention relates to data transmitting and/or receiving devices and, in particular, discloses such a device that receives data for transmission, and stores data from reception on a portable data storage medium.

### Background to the Invention

Devices adapted for transmitting and receiving data over communications channels are well known in the art. Such devices include telex machines wherein data for transmission is typed into the machine which is then transmitted generally over a telephone communication link. Advanced telex machines can derive a data source directly from a computer and transmit that data once a source file has been created. Similarly, received data can be stored directly in a source file.

More recently, facsimile transmission machines have been used to transmit data at substantially higher rates than telex machines and generally, facsimile machines require data to be input on a sheet of paper which is scanned and the scanned data transmitted over a communications link such as a telephone line. More recently, computer systems have been developed whereby facsimile messages can be transmitted and received without an intermediate paper stage. This arrangement, similar to the automatic telex, sources and delivers data from a computer.

In each of the known arrangements, it is necessary to directly interface the computer with the communications channel and this is generally provided by a data modem which converts computer serial data, generally in RS232 configuration, into signals that can be provided directly to the communications link. In stand-alone facsimile machines, the data modem is included in the machine. The use of data modems have gained particular use in personal computer systems and can be provided either as a printed circuit card that can be incorporated into the personal computer, or as a stand-alone device connected between the communications link and the personal computer.

However, recent developments in personal computers have created what has become known as the laptop computer which is substantially portable and consumes little power. A further advancement on the laptop computer is the so-called Notebook-PC which operates in a manner similar to a laptop personal computer except that the display, usually a liquid crystal display, also functions as a data input device using an electronic pen. Data is stored and edited on a display-by-display basis.

### Summary of the Invention

In accordance with one aspect of the present invention there is disclosed a data transmitting and/or receiving device comprising a data medium interface for interconnecting said device with a data storage medium from which transmission data can be read for transmission and/or stored after reception, processor means connected to said data medium interface, and a communications interface connected to said processor means, said communications interface interconnecting said device with a communications link over which said transmission data is conveyed, said processor means controlling the transfer of said transmission data between said data storage medium and said communications link, and vice versa.

Generally, the data storage medium is a portable medium such as a diskette or a memory card.

Also generally, the device is portable and powered by a battery power source. Additionally, the communications link can be any known communications link such as a telephone line, radio channel or optical channel.

### Brief Description of the Drawings

A number of embodiments of the present invention will now be described with reference to the drawings in which:
Figure 1 is a schematic block diagram of a general arrangement; and
Figure 2 is a schematic block diagram of a preferred device for interconnection to a telephone line.

### Best and Other Modes of Carrying Out the Invention

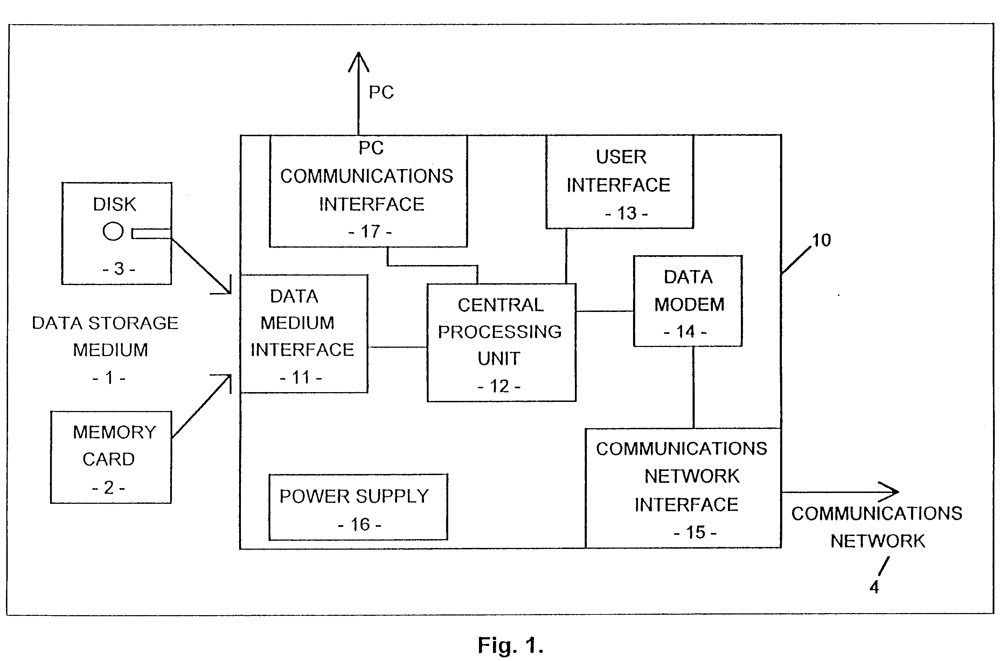

Referring to Figure 1, a data transceiver 10 is shown which includes a data medium interface 11 connected to a central processing unit (CPU) 12. The CPU 12 also connects to a user interface 13, a data modem 14 which in turn connects to a communications network interface 15. The communications network interface 15 is adapted for connection to a communications network 4. The data transceiver 10, via the data medium interface 11, is connectable to a portable data storage medium 1 such as a memory card 2 or a disk 3 as shown. Also, preferably, a PC communications interface 17 is provided which permits interconnection between the CPU 12 and a personal computer (PC) or like device.

Using this arrangement, data intended for transmission can be stored on the data storage medium 1 whereupon, for transmission, the medium 1 is inserted into the data medium interface 11 whereupon, under control of the CPU 12, the data transceiver 10 transmits that data over the communications network 4. In a similar manner, the data transceiver 10 can receive data from the communications network 4 and store it on the data storage medium 1. The medium 1 can then be withdrawn from the transceiver 10.

In this manner, a mainframe computer, personal computer, laptop computer or Notebook PC for example, hereinafter referred to as computer systems, can be used to programme the data storage medium 1 with a message for transmission wherein the medium 1 can be removed from the computer device and inserted into the data transceiver 10. Similarly, received messages can be viewed using the computer system by removing the data storage medium 1 from the data medium interface 11 and inserting same into the computer system.

With technology available as of the date of this application, the data storage medium 1 can be a floppy disk 3 as known in the art such as 3 ½" disk. If such a disk 3 is used, the data medium interface 11 is a disk drive capable of reading data from, and writing data to, the disk 3. However, due to substantial power consumption of a disk drive, this arrangement is not preferred.

The arrangement shown is particularly conducive to the use of a memory card 2 in which the data medium interface 11 is a memory card adaptor which connects the memory card 2 directly to the CPU 12.

Devices such as the memory card 2 are known in the art and essentially consist of random access memory (RAM) incorporated into a card-like device with dimensions of approximately 100mm x 60mm x 4mm. The memory card 2 represents non-volatile RAM which, once loaded with data, can be withdrawn from an interface device and transferred to other devices in a manner similar to floppy disks.

Recently, the PCMCIA (Personal Computer Memory Card International Association) standard has been developed which allows for memory cards to be developed having a storage capacity up to about 64 megabytes. Such devices offer substantially more memory capacity than known floppy disks with substantially faster access times for reading and writing data. Also, such memory cards utilize a pin and socket connector and a drive mechanism such as a disk drive is not required. Accordingly, memory cards consume little or no more power, other than that required to read and store data. In addition, memory cards have allowed for the substantial acceptance of the versatility and portability of Notebook-PCs.

Apart from floppy disks and memory cards as described, the data storage medium can also be for example, removable hard disks, storage tapes, smart cards, bubble memory units, and EEPROM cards, and other such non-volatile portable storage media as may be developed in the future.

The communications network interface 15 provides appropriate functional, physical and safety requirements necessary for connection of the data transceiver 10 to the communications network 4. The communications network 4 can for example be a public switch telecommunications network (PSTN) but can also be other transmission media such as an integrated services digital network (ISDN), satellite links, infra-red links, local area network, wide area networks, microwave links, fibre optic links and RF links or networks such as cellular telephone networks.

The CPU 12 controls the operation of the data transceiver 10 including the data medium interface 11 and the data modem 14. The CPU 12 acts to fetch set-up data from a configuration file resident in the data storage medium 1, and use this information to determine the file to be transmitted, the destination of the transmission, such as the telephone number to be dialled, the dialling format and other relevant information. The CPU 12 controls the modem 14 and the network interface 15 to initiate a call and establish a link to the communications network 4. Data can then be transmitted from the data storage medium 1 to the destination on the communications network 4.

Reception of data operates in a similar manner, however the CPU 12 controls the modem 14 and the network interface 15 to answer an incoming call and receive data that is stored on the data storage medium 1.

Preferably, in both transmission and reception, a log file is stored on the data storage medium 1 to allow a user to view transmission information on the computer system, including the data time of connection, connection status, the size of data transfer and any other relevant data.

The data modem 14 provides for monitoring of the network 4 as well as monitoring call progress functions in addition to necessary modulation and demodulation circuitry. The modem 14 can also include for various applications, digitising and reproduction circuits for speech, music and video.

The data transceiver 10 is generally controlled automatically by the central processing unit 12 whereby, upon insertion of the data storage medium 1, and physical connection to the communications network 4, transmission of data stored on the medium 1 can occur automatically. Accordingly, the user interface 13 need only be simple because any necessary control information is pre-programmed onto the configuration file of the data storage medium 1. However, in general, the user interface 13 can provide status indicator lights which show the user the status of data transmission reception and can also include switches which can manually implement or abort data transmission reception.

The data transceiver 10 receives power from the power supply 16 connected to the various components within and, in the preferred portable embodiment, the power supply 16 comprises a battery arrangement. In other embodiments the power supply can be derived directly from the communications network 4, or where the data transceiver 10 is non-portable, as will be later described, the power supply 16 can derive power from a mains supply. A combination of these arrangements can also be provided.

In the portable embodiment, incorporating a battery power supply, the power supply 16 incorporates circuity which enables powering of the data transceiver 10 only upon insertion of the data storage medium 1, and the establishment of a connection to the communications network 4. This allows preservation of battery power until the data transceiver 10 is correctly configured to either transmit or receive data.

Where the PC communications interface 17 is provided, this permits initialization of the CPU 12 and other associated components where necessary. Also, the interface 17 permits the transceiver 10 to be directly connected to the computer system for transmission and reception, therefore not requiring the storage of transmission data on the medium 1. When used as such, the transceiver 10 operates in a manner corresponding to known data modems.

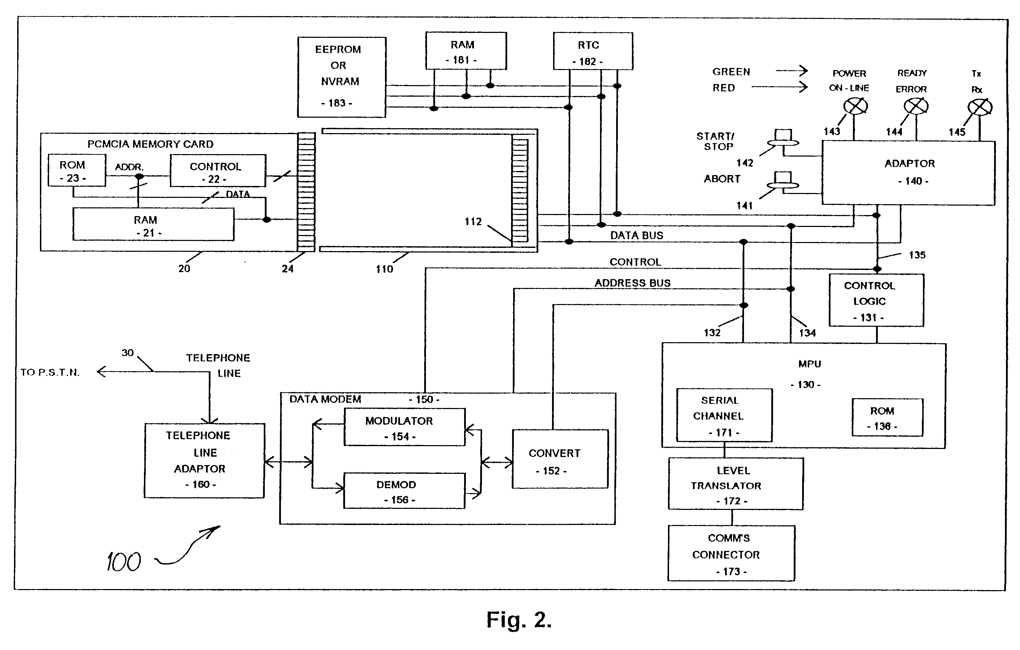

Figure 2 shows a specific embodiment of a portable data transceiver 100 configured to receive a PCMCIA memory card 20 and to connect to a telephone line 30 forming part of a PSTN.

As seen in Figure 2, the PCMCIA memory card 20 represents a standardised device which is connectable to personal computers, laptops and Notebook-PCs. Standard memory cards 20 include non-volatile random access memory (RAM) 21 and control circuitry 22 each of which connecting to strip of connector pins 24. In this manner, the memory card 20 acts as portable RAM which can be transferred from one computer system to another. Generally, existing computer systems create data files using proprietary software such as either or both of MS DOS (registered trade mark) or Windows 3 (registered trade mark) environments.

For the transmission of data, a user creates a message file which is stored in the memory card 20. The user also creates a configuration file which contains necessary set-up information such as the transmission destination (e.g. telephone number to be dialled), a transmission mode of operating the transceiver 100, which data files are to be transmitted as well as transmission information such as data rates. The card 20 is then removed from the computer system and inserted into a memory card adaptor 110 of the transceiver 100. The memory card adaptor 110 includes a socket strip 112 which mates with the pin strip 24 of the memory card 20. The socket strip 112 interconnects with a data bus 132, an address bus 134 and a control bus 135, which connect to a microprocessor unit (MPU) 130. A control logic unit 131 provides memory decoding and other functions required to allow interconnection of peripheral devices to the MPU 130. In this manner, the MPU 130 can directly access data stored in the RAM 21 of the card 20.

A data modem 150 connects to the busses 132, 134 and 135 and includes a converter 152 which receives data from the data bus 132 and converts that parallel data into serial data for transmission. For transmission, serial data is output to a modulator 154 such as frequency modulator or phase shift modulator which supplies a telephone line adaptor 160. The telephone line adaptor 160 includes any circuitry required to isolate the telephone line 30 from the remaining electronic circuitry of the transceiver 100. Such adaptors 160 and data modems 150 are well known to those skilled in the art of data modems.

The data modem 150 also includes a demodulator 156 which operates when the transceiver 100 is receiving information from the telephone line 30. From the demodulator 156, serial data is converted into parallel data which is output on the data bus 132 for storage in the RAM 21.

Preferably, the MPU 130 is a single-chip, multi-function device and many examples of such are known in the art. Generally, the MPU 130 includes a read-only memory (ROM) 136 in which a controlling program is stored and is used to control the operation of the transceiver 100. Not illustrated is a power supply such as the power supply 16 shown in Figure 1. The interconnection of such a supply would also be apparent to those skilled in the art.

The transceiver 100 also includes a RAM 181 which, in addition to any available space in the RAM 21, can be used for buffering data, error detection/correction and other temporary storage. Configuration parameters which require permanent storage but can be user alterable can be retained in a non-volatile RAM (NVRAM) or EEPROM 183.

Also, a real-time clock 182 is provided so that all transmitted and received files can be time/date stamped. The clock 182 can be set via a direct connection to a computer system via a communications interface formed by a serial channel port 171 of the MPU 130, a level translator 172 and a communications connector 173, each known in the art.

Also connected to the busses 132, 134 and 135, is a user interface adaptor 140 which provides interconnection with user interface components such as dual-colour light emitting diodes (LEDs) 143, 144, and 145 and push button switches 141 and 142. Preferably, the LEDs 143 to 145 are dual coloured as shown in Figure 2 to indicate to a user the relevant status of the transceiver 100. The push buttons 141 and 142 allow for manual control of the transceiver 100 where the configuration file (already described) does not automatically institute the transmission or reception of a message. Where a memory card is not inserted into the adaptor 110, the "power" LED 143 is green and the other LEDs 144 and 145 are off.

### Transmission

On insertion of the memory card 20 into the adaptor 110, the MPU 130 checks both the configuration file and/or required data files for integrity and once confirmed, the LED 144 is illuminated green to show "READY". Data and configuration errors are indicated by the LED 144 flashing red indicating an error. When this occurs, the appropriate date and time, generally obtained from a real-time clock preferably included with the MPU 130 is written to a log file on the memory card 20 which can be later read by a computer system.

The configuration file of the memory card 20 is then read by the MPU 130 and if an automatic transmit mode is enabled, the MPU 130 instructs the telephone line adaptor 160 to seize the telephone line 30. When this is done, the LED 143 illuminates red indicating "ON LINE". The required number is then dialled, either using DTMF or decadic dialling as set by the configuration file or by internal switching of the data modem 150 which can be set up for either method of dialling.

The data modem 150 then commences handshake sequences with the receiving device at the other end of the telephone line 30 and once these have been completed, the LED 145 illuminates green indicating "TRANSMIT". When this occurs, data is transferred from the RAM 21 to the destination over the telephone line 30. On completion of transmission, the LED 145 is turned off and the LED 143 returns to green and the LED 144 flashes green indicating the completion of transmission. The memory card 20 can then be removed.

The configuration file can also include settings for automatic re-dialling when a bad transmission or connection is obtained. Also, multiple files can be programmed for transmission to various destinations, and operate in a manner similar to that described above.

Where the transceiver 100 is used to communicate directly to a computer system via a telephone line 30, initial hand-shaken data modem calls operate in a similar manner except that additional log-on and control scripts files are required to be stored on the card 20.

If manual transmission is required where a manually operated facsimile or data modem is used at the received end, the configuration file stored in the memory card 20 contains a manual flag and the transceiver 100 upon reading such a flag follows a similar start sequence to that described above except that when dialling is required, it is necessary for the user to depress the start/stop button 142 to commence transmission. For example, where the transceiver 100 is connected for example, in series or parallel with a standard telephone handset, the telephone line connection can be established by the user dialling on the telephone in the normal way, and upon hearing fax or data modem tones over the telephone connection, can then depress the start button 142 to commence data transmission.

### Receive

An incoming call can only be received by the transceiver 100 when a memory card 20 is inserted into the adaptor 110. When an incoming call is received, the transceiver 100 will check the configuration file on the card 20. If the card 20 is not inserted, or the card 20 is set up for manual receive, then the incoming call is directed to a telephone handset, connected in parallel or series with the telephone line adaptor 160.

If the configuration file contains auto receive commands, the transceiver 100 will answer the call and monitor the line for fax or data modem tones. If no tones are detected after one second, the call is assumed to be voice and a ring tone is then sent to both the calling party and the parallel or series connected telephone handset which can then be answered as a normal call. When the incoming ring is detected, the LED 143 flashes red indicating "ON LINE" with the ring cadence and remain on during the one second line monitor period. The LED 143 again flashes red when a local ring-tone is being generated.

If fax or data tones are detected, the transceiver 100 commences the hand-shake sequence and receives any transmitted information which is stored in the RAM 21 along with a log file giving the date, time and any error information. The LED 145 illuminates red to indicate "RECEIVE" and the LED 143 remains illuminated red indicating "ON-LINE" until the call is complete.

In the case of manual calls, the user is required to lift the handpiece of the local parallel connected telephone on the ring, and after hearing fax/data modem calls, press the start button 142.

As seen in Figure 2, the transceiver 100 also includes an abort button 141 which is used to stop transmission or reception on demand by the user.

In addition to fax/data transfer the transceiver 100 can also contain voice encode/decode circuitry which in some cases is included in the modem 150. The transceiver 100 can then perform all functions of a telephone answering machine in addition to that of a fax with the added advantage of smoother integration.

One desk-top application is where the transceiver 100 answers incoming calls and re-directs, if no fax tones are detected, as described above, but then answers the call if an attached telephone has not gone off-hook within a preset number of rings. Once answered, an outgoing message can be retrieved from the memory card 20 and incoming messages would be stored on the card 20. Messages can be recorded/replayed by internal audio circuitry and transducers or transferred to a computer system fitted with sound facilities.

A portable application could function in a similar manner without local audio record/play circuitry to reduce size/power consumption.

The PC communications interface can be used to allow the transceiver 100 to behave as a standard on-line data/fax modem similarly to commonly available units. Standard command sets such as "Hayes AT" and TR29/EIA-578 can be implemented allowing use of third party data communications and fax software.

The transceiver 100 can provide the ability to relay fax, data or voice messages to remote locations on detection of an incoming call from another transceiver unit (portable for example). On recognition of a proprietary command sequence during/after call establishment the remote PC/transceiver can interrogate the main unit for received status information and, on request of the remote user, re-transmit the selected files for viewing or printing. The original files can then be deleted on request.

The transceivers 10 and 100 can be readily provided with any communications channel and, apart from individual portable units, can be incorporated into standard telephone handsets, pay telephones, mobile telephones, computers, paper operated facsimile machines, or any product that contains a telecommunications network connection. In such embodiments, the communications network interface 15 or telephone line adaptor 160 can be omitted as these will generally reside in the equipment into which the transceivers 10 or 100 are being incorporated. Depending on function of the equipment, the data modems 14 and 150 may also be not required.

The transceiver 10 and 100 provide various advantages over currently available data transmission systems. The use of the data storage medium 1 such as memory card 20 eliminates the need for a computer system to be connected to the telecommunications link via a cable or other means when transmission/reception is in progress. In this manner, the computer system can be used for another purpose. Furthermore, the use of memory cards provides for storage of large volumes of transmitted information in a convenient package without the necessity to reproduce that information in hard copy form. Also, the transceivers 10 and 100 can be configured in a small size package consuming low amounts of power which affords portability and use in mobile telephone systems as well as other low power devices such as public pay telephones and private telephones.

As seen in Figure 2, the memory card 20 can be additionally supplied with a read-only memory (ROM) 23 which can include a key-code. In this manner, the transceiver 100 can be used to only permit transmission and reception of messages when the key code in the ROM 23 matches, or mates with a corresponding key code residing in the ROM 136 of the MPU 130. For example, when a memory card 20 is inserted into the adaptor 110, the MPU 130 can then immediately interrogate the key code on the card 20 and compare that with that stored within the ROM 136. If the codes match, further operation of the transceiver 100 is enabled allowing either transmission or reception. In this manner, data stored in the RAM 21 of the memory card 20 can be protected from unauthorised reading by a user not in possession of the keys within the ROM 23.

Alternatively, the key codes may be stored only within the RAM 21 and hence can be varied on a periodic basis. Such an arrangement would not require the ROM 23 to be provided with the memory card 20.

The transceiver 100, due to the ready accessibility of the RAM 21, can operate at a wide variety of data rates. Typically 4800 baud and 9600 baud are used in telephone systems, but in RF or optical systems, substantially higher data rates, generally up to 100 MHz can be used.

### Industrial Applicability

The embodiments described are applicable to data transmission systems and in particular where a portable means of data transmission is required.

The foregoing describes only a number of embodiments of the present invention and modifications, obvious to those skilled in the art, can be made thereto without departing from the scope of the present invention.

## Claims

1. A data transmitting and/or receiving device (10, 100) comprising a data medium interface (11, 110) for interconnecting said device with a data storage medium (1, 20) from which transmission data can be read for transmission and/or stored after reception, processor means (12, 130) connected to said data medium interface, and a communications interface (15, 150, 160) connected to said processor means, said communications interface interconnecting said device with a communications link (4, 30) over which said transmission data is conveyed, said processor means controlling the transfer of said transmission data between said data storage medium and said communications link, and vice versa.

2. A device as claimed in Claim 1, wherein said data storage medium (1, 20) is selected from the group consisting of a diskette, a memory card, a hard disk, a magnetic tape, a smart card, a bubble memory unit and an EEPROM card.

3. A device as claimed in Claim 2 wherein said data storage medium is a memory card (20) configured in accordance with the PCMCIA standard.

4. A device as claimed in Claim 1, 2 or 3 wherein said device is portable and powered by a battery power source.

5. A device as claimed in any one of Claims 1 to 4 wherein said communications link is selected from a group consisting of a radio channel, an optical channel, a public switch telecommunications network, an integrated services digital network, a wide area network and a local area network.

6. A device as claimed in Claim 4 or 5, wherein the communications link is an infra-red link and/or a fibre optic link.

7. A device as claimed in Claim 5, wherein said communications link is a radio channel selected from the group consisting of a satellite link, a microwave link, and a cellular telephone network.

8. A device as claimed in any one of Claims 1 to 7, wherein said communications interface (15) at least includes a data modem (150) adapted for modulation and/or demodulation of said transmission data carried over said communications link, and an adaptor (160) interfacing said modem with said link.

9. A device as claimed in any one of Claims 1 to 8 and further comprising a computer interface (17) adapted to permit direct interconnection of said device with a computer system thereby enabling transmission and/or reception of data directly from and/or into said computer system, without the need for intermediate storage of said transmission data on said data storage medium.

10. A device as claimed in Claim 9, wherein said device is adapted to be initialized by said computer system via said computer interface.

11. A device as claimed in Claim 10, further comprising a real-time clock adapted to be initialized by said computer system and permitting recording of the time of transmission and/or reception of said transmission data.

12. A device as claimed in any one of Claims 1 to 11, wherein transmission parameters are stored on said data storage medium together with said transmission data to identify a destination and source of said data and a selectable code of transmission.

13. A device as claimed in any one of Claims 1 to 12, wherein said device is adapted to utilize free memory within said data storage medium as free memory for said processor means.

14. A device as claimed in any one of Claims 1 to 13, further comprising a free memory means associated with said processor means and used for temporary storage of said transmission data and/or transmission parameters applicable thereto.

15. A device as claimed in any one of Claims 1 to 14 and further comprising a user interface (13) adapted to indicate a transmission/reception state of said device and permitting user control over the commencement and ending of a transmission and/or reception.
